# EUROPEAN PATENT SPECIFICATION

(11) **EP 3 092 118 B1**
(45) Date of publication and mention of the grant of the patent: **11.09.2019**
(21) Application number: 15700010.0
(22) Date of filing: 05.01.2015
(51) Int. Cl.: B29D 11/00, B29C 37/02

(54) **OPHTHALMIC LENS MANUFACTURING METHOD AND APPARATUS THAT INCLUDE FLASH REMOVAL FROM LENS MOLD MEMBERS**
BRILLENGLASHERSTELLUNGSVERFAHREN UND VORRICHTUNG MIT GRATBESEITIGUNG VON LINSEFORMELEMENTEN
PROCÉDÉ, SYSTÈME ET APPAREIL DE FABRICATION DE LENTILLE OPHTALMIQUE QUI INCLUENT LA SUPPRESSION DE BAVURE SUR DES ÉLÉMENTS DE MOULE DE LENTILLE

(30) Priority: 06.01.2014 US 201461924104 P
(43) Date of publication of application: 16.11.2016
(73) Proprietor: CooperVision International Holding Company, LP, St. Michael (BB)
(72) Inventor: IRIZARRY MARTELL, Alvin N., Juana Diaz 00795 (PR); REYNOLDS, Mark, Scottsville, New York 14546 (US); LEONE, John, Scottsville, New York 14546 (US); COOK, James, Beccles Suffolk NR34 7TE (GB)
(74) Representative: Abel & Imray
(86) International application number: PCT/GB2015/050004
(87) International publication number: WO 2015/101793

(56) References cited:
- EP-A1- 0 635 347
- WO-A1-2012/124808
- US-A- 4 516 301
- US-A- 5 573 108
- US-A1- 2005 206 019
- US-A1- 2012 164 261
- US-B1- 6 368 096

## Description

### FIELD

This disclosure relates to the field of ophthalmic lens manufacture, and in particular to methods, apparatuses, and systems that include components for removal of flash from mold members used in the manufacture of ophthalmic lenses.

### BACKGROUND TO THE INVENTION

In the manufacture of soft contact lenses, such as hydrogel and silicone hydrogel contact lenses, that are formed between two mold parts of a contact lens mold assembly, excess lens formulation present outside the lens molding cavity of the assembly can be polymerized during a polymerization step used to form a lens body, and the polymerized excess lens formulation is referred to as flash. Flash presents a problem in both cast molded manufacturing and in manufacturing in which lathes are used to form soft contact lenses. For example, flash can interfere with machinery used in the delensing and transfer of lenses from the molds, and can interfere with inspection steps. For example, in a lathing system, presence of flash can cause a misalignment of the lens in the lathe, which will result in a rejected lens.

US 6368096 B1 discloses an apparatus and a method for removing flash from a lens female mold section.

Thus, there remains a need for improvement in manufacturing processes of ophthalmic lenses, such as soft contact lenses, to help reduce problems associated with the presence of flash.

### SUMMARY

Various aspects of the present invention relate to the removal of flash from molded contact lens bodies. The molded contact lens bodies can be cast molded lens bodies that have two optical quality surfaces (e.g., the lens bodies are formed between two contact lens mold surfaces shaped to provide a final optical design on the lens body), or the molded contact lens bodies can have one molded optical quality surface, and one non-optical quality surface, in which the non-optical quality surface is cut after the lens body is formed to provide an optical quality surface. The cutting can be performed by a lathe, and the like, and thus, such lenses are referred to herein as lathed lenses. Thus, while details described herein can be directed to lathed lenses in particular, various teachings and aspects of the invention can relate to cast molded lenses, as well.

According to a first aspect of the present invention, the present disclosure is directed to an apparatus according to claim 1 for removal of flash from a contact lens mold member following the manufacture of an unfinished polymerized contact lens body in a mold assembly, in which the contact lens mold member includes a mold surface for carrying an unfinished polymerized contact lens body and a peripheral surface. The apparatus includes a support for supporting the mold member during de-flashing (i.e., during a step when any flash present on the mold member is dislodged so that it can be removed from the mold member without damaging the unfinished polymerized contact lens body). The apparatus also includes a de-flashing element for separating flash from the peripheral surface of the mold member. The de-flashing element includes a cutting edge. The apparatus also includes an axial driver arranged to bring together the de-flashing element and the mold member supported on the support. The de-flashing element and the mold member are brought together such that at least a portion of the cutting edge of the de-flashing element is in a position proximal to the peripheral surface of the mold member. The apparatus further includes a rotary driver arranged to rotate the de-flashing element, or the mold member supported on the support, or both, relative to each other when at least a portion of the cutting edge is proximal to the peripheral surface of the mold member, thereby separating flash from the peripheral surface of the mold member.

According to a second aspect, the invention also provides a method of manufacturing a contact lens according to claim 8.

According to a further aspect of the present invention, a system for manufacturing contact lenses is provided. The system includes the apparatus of claim 1 for removing flash from a contact lens mold member (de-flashing apparatus), as described herein. The system further includes a contact lens mold assembly receiving apparatus (contact lens mold assembly receiver) configured to receive contact lens mold assemblies containing polymerized unfinished contact lens products disposed between first and second contact lens mold members. The receiving apparatus is also configured to arrange the contact lens mold assemblies in a manner to be received by a contact lens mold demolding apparatus (contact lens assembly demolder). The demolding apparatus receives one or more contact lens mold assemblies and separates one mold member from the other mold member. The unfinished contact lens product remains attached to one of the mold members. The system can also include a lens imaging apparatus (contact lens imager) to image the lens on or off of the mold member after removal of some or all of the flash. The system can also include a lens arrangement system to group and arrange de-flashed lenses, attached to mold members, for delivery to a contact lens lathing apparatus, where the lathing apparatus may be a component of the present system, or as a separate system. The lens arrangement system can be referred to as an accumulator, or lens mold accumulator. This system can be envisioned to be a unit of a contact lens manufacturing line.

In the present apparatus, system and method the deflashing element is a cylindrical device and comprises a cutting edge configured to remove flash in a circular pattern. Thus, the present apparatus, systems, and methods comprise a cylindrical deflashing element or a deflashing element comprising a cylindrical body member. The deflashing element of the present apparatus, systems, and methods is configured to move axially with respect to an ophthalmic lens mold positioned on a support such that axial rotation (along the length of the element) of the deflashing element provides a circular removal of flash around the circumference of the ophthalmic lens mold. The deflashing element can be co-assembled with an ophthalmic lens mold assembly demolder or assembled separate from the demolder.

### BRIEF DESCRIPTION OF THE DRAWINGS

Embodiments of the invention will now be described, by way of example only, with reference to the accompanying drawings.
FIG. 1 shows a perspective view of a first example embodiment of the de-flashing apparatus of the invention.
FIG. 2 shows a) a perspective view of the de-flashing element of the apparatus of FIG. 1; b) a top view of the de-flashing element; c) a side cross-sectional view of the de-flashing element; d) a further side cross-sectional view of the de-flashing element; e) a further top view of the de-flashing element; and f) a further side cross-sectional view of the de-flashing element through the plane AA of (e).
FIG. 3 shows a) a perspective view of a further embodiment of a de-flashing element according to the invention; b) a top view of the de-flashing element; c) a side cross-sectional view of the de-flashing element; d) a further side cross-sectional view of the de-flashing element rotated through 90 degrees; e) a further top view of the de-flashing element; and f) a further side cross-sectional view of the de-flashing element.
FIG. 4 shows a) bottom view of the rotary plate forming part of the support of the apparatus of FIG. 1, together with two side views and one side cross-sectional view of the rotary plate; b) a top view of the rotary plate; and c) perspective views of the top and bottom plates which form the rotary plate.
FIG.5 shows an automated embodiment of the present apparatus that includes an ophthalmic lens mold demolder that includes a deflashing element, an analyzer that includes a vision system, and an accumulator that includes one or more tubes to retain deflashed lens mold members.
FIG. 6 illustrates the ophthalmic lens mold demolder of FIG. 5 that includes a punching tool to demold the female mold member and the male mold member, a rotational member of a de-flashing element, and a vacuum system to remove separated flash. The male mold member to be de-flashed would be located on the support plate near the bottom of the figure underneath the de-flashing element and in proximity to the vacuum system.
FIG. 7 is an illustration of the vision system of FIG. 5 illustrating three illuminators and a camera to acquire illuminated images of the male mold member.
FIG. 8 is an illustration of a plurality of tubes, which are one embodiment of the deflashed mold accumulators described herein.
FIG. 9 is an illustration of a male contact lens mold member having an unfinished contact lens body attached to a convex surface of the mold member.
FIG. 10 is an illustration of a de-flashing apparatus of the present disclosure.

### DETAILED DESCRIPTION

As described herein, the present methods, systems, and apparatuses utilize one or more components to separate flash from contact lens mold members having contact lenses attached thereto. In the present disclosure, the description focuses on removal of flash from male contact lens mold members to which a polymerized unfinished contact lens body remains attached. The male contact lens mold member refers to one of two contact lens mold members that has a convex lens forming surface, which provides the shape for the posterior surface of the contact lens formed thereon. However, in certain embodiments of the present invention, it can be appreciated that the various aspects can remove flash from female contact lens mold members.

Prior to being de-flashed, the polymerized unfinished contact lens bodies must be formed. Typically, male and female contact lens mold members are formed and are provided to a filling station where a contact lens formulation can be provided onto a concave surface of the female contact lens mold member. As discussed herein, the concave surface can be an optical quality surface or it can be a non-optical quality surface if the lens will be cut to provide an optical quality surface. In the following description, it will be assumed that the concave surface is a non-optical quality surface. One male mold member and one female mold member are assembled together to form a contact lens mold assembly containing the contact lens formulation in a lens molding cavity. The contact lens formulation can contain reactive ingredients, such as monomers, macromers, pre-polymers, cross-linkers, and the like, as well as non-reactive ingredients, such as diluents, surfactants, non-reactive polymers, and the like. The lens formulation can be suitable for forming hydrogel contact lenses (i.e., hydrogel contact lenses without silicone) or silicone hydrogel contact lenses (i.e., hydrogel contact lenses that contain silicone). To produce multiple contact lenses, multiple mold assemblies are formed. Any excess contact lens formulation is directed from the lens molding cavity towards a more peripheral location of the mold assembly. The contact lens mold assemblies are then exposed to conditions, such as heat or ultraviolet light, to cause polymerization of the contact lens formulation. The contact lens mold assemblies containing the unfinished polymerized contact lens bodies, and possibly flash, are directed to a demolding station. At the demolding station, the male and female mold members are separated from each other, and the polymerized contact lens body remains attached to one of the mold members. As mentioned herein, in certain examples, the following description will be based on the understanding that the polymerized contact lens body remains attached to the male mold member. In addition, any flash that may be present, may also remain attached to the male mold member. The demolded male mold member having the polymerized contact lens body attached thereto is then directed to a de-flashing apparatus or an apparatus for removal of flash from the mold member. The de-flashing apparatus can be built as part of the demolding apparatus, or it can be a separate device, which may be adjacent to the demolding apparatus. Subsequently, in the case of a lens with two optical quality surfaces, the de-flashed lens can be delensed (separated from the male mold member) and further processed. Or, in the case of a lens with only one optical quality surface, provided by the male mold member, the deflashed lens and male mold member combination can be directed to a lens cutting apparatus, such as a lathe. The deflashed lens and male mold member combination can be accumulated first in an accumulator prior to directing to the lens cutting apparatus.

As now described in more detail, the present de-flashing apparatus comprises: (a) a support for supporting the mold member during de-flashing; (b) a de-flashing element for separating flash from a peripheral surface of the mold member, wherein the de-flashing element comprises a cutting edge; (c) an axial driver arranged to bring together the de-flashing element and the mold member supported on the support such that at least a portion of the cutting edge is in a position proximal to the peripheral surface of the mold member; and (d) a rotary driver arranged to rotate the de-flashing element, or the mold member supported on the support, or both, relative to each other when at least a portion of the cutting edge is proximal to the peripheral surface of the mold member, thereby separating flash from the peripheral surface of the mold member.

In the present disclosure, the de-flashing apparatus includes the equipment required for the removal of flash from a mold member.

The contact lens de-flashing apparatus of this disclosure can effectively and efficiently remove flash from a contact lens mold member. The arrangement of the apparatus of the present disclosure enables it to be effective and thorough when removing flash from the peripheral surface of a mold member without damaging the mold member or a contact lens carried on the mold member. It is desirable to remove all flash from a contact lens mold member.

As described herein, the unfinished polymerized contact lens body can be a cast-molded lens body having a first cast-molded contact lens surface and a second cast-molded unfinished surface. The unfinished surface can be lathed to form a lathed contact lens surface, and then the lathed lens body can be delensed from the mold member, and further processed to form a finished contact lens.

A mold member for use with the present de-flashing apparatus has a peripheral surface and a mold surface carrying the unfinished contact lens body. The peripheral surface is the surface of the mold member where excess contact lens formulation accumulates and becomes flash during polymerization. The peripheral surface is a surface of the mold member which is not covered by or in contact with the contact lens body. Optionally, the peripheral surface and the mold surface carrying the unfinished contact lens body are adjacent to one another, and preferably directly adjacent such that the juncture of an edge of the peripheral surface and an edge of the mold surface form a portion of an edge of the contact lens body formed therein.

As described herein, the surface of the mold member carrying the unfinished contact lens body is the surface of the mold member on which the lens body was cast. That surface may have formed an optic zone of the unfinished lens body, or may have formed a blank surface. It may have formed the back surface or the front surface of the lens body; preferably, it has formed the back surface, more preferably, it has formed a standard back curve of a lens body.

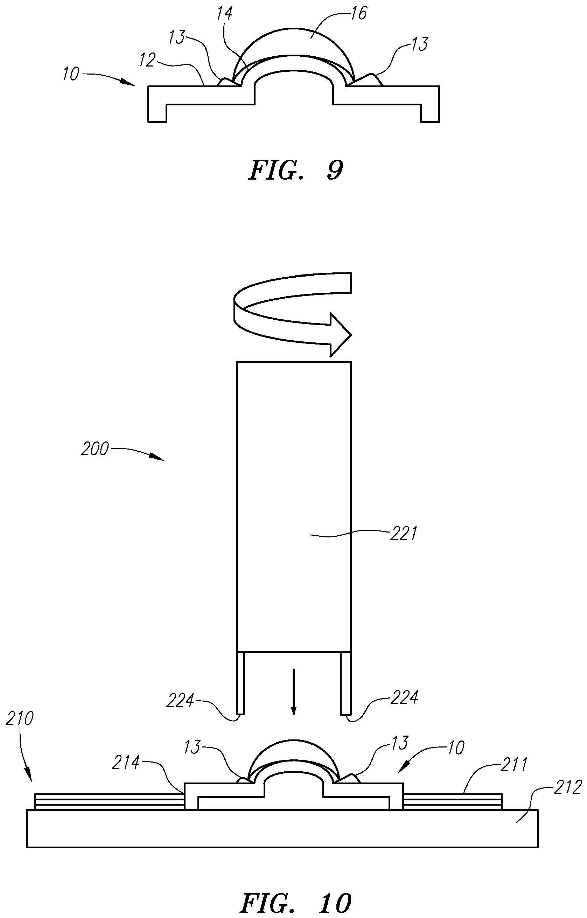

According to preferred embodiments of the present disclosure, the mold surface carrying the unfinished contact lens body comprises a curved outer periphery which may be generally convex in shape if it is a male mold member, or generally concave in shape if it is a female mold member. One example of a male mold member 10 is illustrated in FIG. 9, illustrating a lens forming surface 14, an unfinished contact lens 16 attached thereto, and a peripheral surface 12 containing flash 13.

The mold member may be made of any suitable material, for example, a plastic material including an injection molded thermoplastic, for example, polypropylene, polystyrene, an ethylene-vinyl alcohol copolymer, or another type of vinyl alcohol copolymer, for example, a water-soluble vinyl alcohol copolymer. The mold member can be formed of a first injection molded thermoplastic material that has been coated with a second polymeric material. In one or more embodiments of the invention, the mold member comprises an injection-molded contact lens mold member, formed of a thermoplastic material, such as polypropylene or a vinyl alcohol copolymer. In one preferred embodiment, the mold member is a polypropylene mold member having an uncoated lens forming surface.

In one or more embodiments of the present invention, the mold member can comprise a cylindrical base region, for example of circular cross-section, and a lens-surface-forming region, wherein the cylindrical base region comprises the peripheral surface and the lens-surface-forming region comprises said mold surface for carrying the unfinished polymerized contact lens body. The lens-surface forming region can form an optic zone on the unfinished lens body; alternatively, both the back and the front surfaces of the lens body can be cast molded as blanks. For example, a standard back curve of a lens may be formed by the mold member, and the lathing can be used to complete the optic zone and thereby determine the power of the lens. The lathing can be used to add features additional to the sphere power of the lens, for example a cylindrical power, an add-power region for near vision, or an aspheric surface. The lens-surface-forming region of the mold member may form the back surface of the lens. In one preferred embodiment, the lens-surface forming region of the male mold member provides an optical quality surface to the unfinished polymerized contact lens body which does not require further cutting, such as lathing.

The de-flashing apparatus of the present disclosure comprises a de-flashing element for separating flash from the peripheral surface of the mold member. The de-flashing element comprises a cutting edge. The cutting edge of the de-flashing element is any edge capable of removal of flash from the mold member without damaging the mold member. The de-flashing element is arranged to remove flash from the peripheral surface of the mold member without damaging the contact lens carried on the mold member. It is arranged to remove the flash by cutting, loosening, separating and/or scraping the flash from the peripheral surface of the mold member.

In one or more embodiments of the present disclosure, the de-flashing element is sized and configured to at least partially surround the cylindrical base region of the mold member and the rotary driver is arranged to rotate the cutting edge around an outer circumference of the cylindrical base region thereby separating flash from the peripheral surface of the mold member. The cutting edge of the de-flashing element can be sized and configured to at least partially surround the cylindrical base region of the mold member. The rotary drive may be arranged to rotate the cutting edge around an outer circumference of the base region and thereby to separate the flash from the peripheral surface of the mold member.

The de-flashing element can comprise a tube, for example a cylindrical tube, for example of circular cross-section, comprising the cutting edge, for example at an end of the tube. The cutting edge can be defined by a notch in the tube. In such embodiments the end of the tube can comprise a tube wall having a notch, i.e. a recessed portion, the tube wall and notch together defining the cutting edge.

There may be one or more recessed portions cut out from the wall of the tube. In such embodiments the de-flashing element comprises more than one cutting edge. In embodiments where two or more recessed portions are present, the recessed portion cut-outs may be the same size and shape, or different sizes and/or shapes. The recessed portion may extend around a minority of the end of the tube in cross-section, or a majority of the tube wall of the end of the tube in cross-section. Optionally, it extends around a minority of the end of the tube in cross-section. In example embodiments, the tube is of circular cross-section and a recessed portion extends between about 10 and about 85 degrees, around the end of the tube wall, for example about 10, 15, 20, 25, 30, 35, 40, 45, 50, 55, 60, 65, 70, 75,80 or 85 degrees. In embodiments the tube is cylindrical and there is a single recessed portion in the tube wall, the recessed portion having straight edges, and optionally it extends around a minority of the end of the tube in cross-section, for example from around 15 to around 60 degrees, for example from around 15 to around 45 degrees, for example around 30 degrees. The recessed portion may thus define a blade at the end of the tube.

In embodiments with more than one recessed portion, the recessed portion may be evenly spaced or unequally spaced around the end and wall of the tube. In example embodiments the tube is cylindrical and there are two recessed portions of equal size and shape which are evenly spaced on the tube, and more preferably each recessed area extends around a minority of the end of the tube in cross-section, for example from around 15 to around 85 degrees, for example from around 45 to around 80 degrees, for example from around 60 to around 80 degrees. The recessed portions may thus define two or more blades at the end of the tube.

The recessed portion cut out from end and the wall of the tube may have straight or curved edges, or a combination or straight and curved edges. In example embodiments, the recessed portion cut out from end and the wall of the tube have generally straight edges, so forming a step-like recessed portion in the tube-wall.

The cylindrical base region of the mold member can have a circumference and the tube can have a circumference of a size equal to or slightly greater than the circumference of the base region.

The de-flashing apparatus of the present invention also comprises an axial driver arranged to bring together the de-flashing element and the mold member supported on the support such that the de-flashing element is in a position proximal to the peripheral surface of the mold member. In one or more embodiments of the present invention, the axial driver is arranged to axially move the de-flashing element to the mold member. Alternatively, the axial driver could be arranged to move the mold member and/or the support to the de-flashing element.

The axial driver may move the de-flashing element between a first position and a second position, wherein the second position is proximal to the peripheral surface of the mold member. Optionally, the axial driver may move the de-flashing element between the first position and the second position such that the cutting edge of the de-flashing element is in a position proximal to the peripheral surface of the mold member.

The axial driver may be connected directly or indirectly to the de-flashing element. Optionally, it is directly or indirectly connected to the de-flashing element at a part of the element distal from the cutting edge. For example, in embodiments when the de-flashing element is a tube, the axial driver is connected to the de-flashing element at the end portion of the tube distal from the end of the tube comprising the cutting edge.

The axial driver may comprise a retaining axial driver portion and an axial motor for driving the retaining axial driver portion, for example for driving it between a first position and a second position, wherein the second position is proximal to the peripheral surface of the mold member. The retaining axial driver portion can be an element directly or indirectly connected to the de-flashing element that can drive the element axially, for example between the first position and the second position, when powered by the motor.

The motor of the axial driver can be any conventional motor suitable for powering the retaining axial driver portion to move axially. The motor can be electrically powered. The motor can comprise a stepper motor. The motor can comprise a spring or other compressive or tensile source of motive force.

The rotary driver is arranged to rotate the de-flashing element and/or the mold member supported, such that the de-flashing element and mold member are rotated relative to each other when the cutting edge is proximal to the peripheral surface of the mold member, to separate the flash from the peripheral surface of the mold member.

In example embodiments, the rotary driver rotates the de-flashing element. The rotary driver may be arranged to rotate the de-flashing element around the mold member. The rotary driver is arranged such that the cutting edge is rotated around and on the peripheral surface of the mold member, thereby causing separation of the flash from the mold member. For example, in embodiments where the mold member comprises a cylindrical base region comprising the peripheral surface, the cutting edge is rotated around and on the outer circumference of the peripheral surface of the base region.

In example embodiments, the de-flashing element is a tube of circular cross-section and the rotary driver rotates the de-flashing element coaxially with the axis of the tube. The rotary driver may be able to rotate the de-flashing element in one direction around the axis, or in both directions around the axis.

The rotary driver can be configured to rotate the de-flashing element and/or the mold member relative to each other for at least two complete consecutive rotations around an outer circumference of the cylindrical base region. In some embodiments, the de-flashing element, or the mold member, or both, are rotated two or three times to cause removal of any flash present on the mold member.

The rotary driver can comprise a retaining rotary driver portion and a rotary motor for driving the retaining rotary driver portion to rotate or revolve. The rotary retaining driver portion can be an element directly or indirectly connected to the de-flashing element that can drive the element to rotate or revolve when powered by the motor.

The retaining rotary driver portion can be directly or indirectly connected to the de-flashing element. Optionally, it is directly or indirectly connected at a part of the element distal from the cutting edge, for example in embodiments where the de-flashing element is a tube, the rotary driver is connected to the de-flashing element at the end portion of the tube distal from the end of the tube comprising the cutting edge.

The motor of the rotary driver can be any conventional motor suitable for powering the rotation of the retaining rotary driver portion. The motor can be electrically powered. The motor can comprise a spring or other compressive or tensile source of motive force.

The axial driver and rotary driver may be a single driver that can drive the de-flashing element (or the mold member) axially and rotate the de-flashing element (or the mold member).

The de-flashing apparatus of the invention may further comprise a flash collector arranged to remove the flash separated from the mold member by the rotation of the de-flashing element and/or the mold member.

The flash collector may comprise an element for removing the separated flash by suction, for example the flash collector may comprise a vacuum head connected to a vacuum pump. In such embodiments, the de-flashing apparatus can further comprise a vacuum or vacuum source connected to the head.

The flash collector may also comprise a robotic arm on which the element for removing the separated flash can be moved. In embodiments where the flash collector comprises a vacuum head, the robotic arm may be able to pivot the vacuum head and/or move it between a first and second position, wherein the second position is closer to the peripheral surface of the mold member than the first position, such that it can more effectively remove the separated flash from the peripheral surface of the mold member. In alternative embodiments, the element for removing the separated flash from the mold member may be an air blower for blowing off the separated flash from the mold member, or a hose for rinsing off the separated flash from the mold member.

The support for supporting the mold member carrying the unfinished contact lens body during de-flashing may be any structure suitable for achieving that purpose, for example a recess, projection, a plate, a flat surface, a clamp or other means. The support is arranged to receive and support a mold member during the de-flashing step or method. The support may also hold the mold member in position during the de-flashing step or method. The support can be arranged to receive a mold assembly on its upper surface. The support can have a substantially flat upper surface. The support can comprise a recess on the upper surface of the support to receive and support the mold member, or the support can comprise a projection on the upper surface of the support to receive and support a mold member. The recess or projection can be shaped to accommodate a mold member, for example, the shape of the recess or projection can correspond to the shape of a mold member. For example, where the mold member comprises a cylindrical base region, the support may have a recess or projection corresponding to the cylindrical base region shape, for example a recess or projection circular in plan view. In a particular example, the support can comprise a recess shaped to accommodate a cylindrical base region of a mold assembly.

The support can comprise a vacuum head for holding the mold member on the support by suction.

The support for supporting the mold member carrying the unfinished polymerized contact lens body during de-flashing can comprise a rotary table for transporting the mold member to and from a vicinity of the de-flashing element by rotation of the rotary table, and the rotary table can comprise at least one indentation for receiving the mold member.

For example, the recess may correspond to the shape of a part of the mold member, for example the shape of the cylindrical base region, when present. In some embodiments, the support comprises a recess for receiving and supporting a mold member carrying a contact lens body, and the recess is arranged so that the mold assembly is only partially within the recess. For example, it may be arranged such that only a lower portion of mold member is within the recess, and such that the peripheral surface of the mold member is outside the recess and accessible by the de-flashing element. Such an arrangement allows for flash to be removed from the peripheral surface of mold member by the de-flashing element without the support inhibiting removal. Where the support has a projection for receiving and supporting a mold member, the projection can be arranged so that the mold member is only partially within the projection, such that the peripheral surface is accessible to the de-flashing element to allow for removal of flash from the peripheral surface.

The rotary table can include a stationary plate positioned below a rotary plate, the rotary plate comprising one or more apertures of corresponding shape to the mold member and wherein said apertures and the stationary plate form the one or more indentations of the rotary table. The support for supporting the mold member can include a vacuum head for retaining the mold member on the support by suction.

The support can comprise an aperture extending through the body of the support. When present, the aperture can be arranged to allow a gripper to come into contact with a region of the base of the mold member and hold the mold member in a stationary position during the de-flashing process. When provided, a gripper can be any element suitable to grip a mold assembly or a mold member of an assembly so that it can be held or retained in a stationary position in the support during a de-flashing process, for example, held and retained in and/or on the support. The gripper can comprise: a vacuum head; a suction head; one or more gripping fingers, hooks or loops; one or more interference fit connections; or another element for making a non-permanent connection with the mold or a mold member of the assembly. Optionally, it is a vacuum head for holding the mold member on the support by suction. In such embodiments, the de-flashing apparatus can further comprise a vacuum or vacuum source connected to the head. The gripper can comprise a positioner for moving the part of the gripper that performs the gripping function, for example, a robotic arm capable of moving vertically and/or axially.

The apparatus of the present invention may further comprise a contact lens mold assembly demolder for separating a mold assembly into its two or more mold members. Where the mold assembly comprises two mold members, the demolder may separate the mold assembly into its two mold members, with the contact lens body remaining on one mold member. Where the mold assembly comprises a male and a female mold member, optionally the demolding apparatus is arranged such that the contact lens body remains on the male mold member.

The demolding apparatus may comprise a punch demolder comprising a punch head and a punch driver. The demolding apparatus is optionally arranged such that the punch head applies a deforming force to one portion of a mold assembly. The mold assembly can comprise a male and a female mold member, and the demolder is arranged such that the punch head applies a deforming force to a female mold member to separate the mold assembly such that the contact lens remains on the male mold member.

The apparatus can comprise a vacuum head for retaining a male or female mold member in position during demolding.

The apparatus can comprise an analyser configured to detect one or more of an unfinished polymerized lens body, a mold member, flash remaining on the mold member, or flash on the support after de-flashing.

The analyser may be capable of detecting the position of a contact lens body on a mold member. The analyser may be capable of detecting damage to a contact lens body. The analyser may be capable of detecting damage to a mold member. The analyser may be capable of detecting flash on a contact lens body and/or a mold member and/or a support after de-flashing.

The analyser may be able to detect the parameters measured by weighing the mold member and contact lens body.

The apparatus can further comprise a lathing apparatus for lathing an optic surface of an unfinished polymerized contact lens body to provide a custom optic on the unfinished polymerized contact lens body, thereby forming a lathed contact lens body.

As described above, an unfinished contact lens body has a back lens surface, which is a contact lens surface which was cast-molded by a lens-forming surface of a first contact lens mold member, and a front lens surface which was cast molded by a second contact lens mold member. Where one of the lens surfaces is not a finished contact lens surface, i.e. it is not an optic surface, it is a 'blank' surface. Such a surface can be lathed to form a finished contact lens surface of a desired form, i.e. lathed to introduce custom optic zones on that lens surface. For an unfinished contact lens body to be suitable for use in the de-flashing apparatus and method of the present invention, one surface of the lens body is attached to a contact lens mold member, for example the mold member used to form one of its lens surfaces. The other lens body surface is exposed so that it may be subsequently lathed. For example, the back surface of the contact lens body may be attached to a first mold member having a generally convex lens surface (a male mold member), such that the front contact lens surface is exposed and can be lathed.

The lathing apparatus of the manufacturing apparatus of the present invention comprises a cutting tool, for example a diamond or a laser.

A lathed lens body may be processed and packaged as a contact lens.

The invention also provides a system for manufacturing a contact lens, comprising an apparatus according to claim 1.

The invention also provides a method of manufacturing a contact lens according to claim 8. The method comprises: receiving one or more unfinished polymerised contact lens bodies in on or more contact lens mold assemblies, in which each contact lens mold assembly includes a first mold member and a second mold member assembled together, and the first mold member includes a mold surface and a peripheral surface. The method includes demolding the mold assembly so that the first mold member is separated from the second mold member and the unfinished polymerized contact lens body remains on the first mold member. After demolding, the method includes a step of bringing together a de-flashing element comprising a cutting edge and the first mold member such that at least a portion of the cutting edge is in a position proximal to the peripheral surface of the first mold member. The method further comprises rotating the de-flashing element and/or the first mold member relative to each other thereby separating flash from the peripheral surface of the first mold member.

The method can include removing separated flash from the first mold member following the separation of the flash by the de-flashing element.

As described herein, following the formation of the polymerized lens body in the mold assembly, the mold assembly can be opened by separating its mold members, so that the lens body formed in the lens-shaped cavity of the mold assembly is exposed. This may be achieved by any suitable demolding apparatus, for example a punch demolder, such that the contact lens body remains attached to one mold member, being the male mold member.

The demolding step may further comprise removing the second mold member from the surface of the first mold member. Optionally, the second mold member is removed from the surface of the first mold member, such that the contact lens body remains attached to the first mold member. Optionally, the second mold member is a female mold member and the first mold member is the male mold member. Thus, the demolding method of the present invention may be achieved by placing the mold assembly under a puncher, the puncher comprising a punch head and a punch driver, and using the punch driver to move the punch head onto the surface of the second mold member with sufficient force that the mold assembly is separated into the first mold member with the attached unfinished polymerised contact lens body attached, and the second mold member. The mold member(s) not carrying the contact lens body can be disposed of.

In a method of the present invention, the unfinished lens body has been demolded but not delensed prior to flash removal. The flash needs to be removed from the mold member before lathing or before delensing. This helps ensure the weight of the mold and attached unfinished lens body are balanced when they are rotated during the process of lathing the 'blank' surface of the unfinished lens body. The method can further comprise, after removal of the flash, the step of lathing at least a portion of a surface of the unfinished polymerized contact lens body to provide a lathed lens surface having a custom optic, forming a lathed contact lens body. The custom optic may be for example an optical correction or effect additional to a sphere power, for example a cylindrical power, an add power, or an aspheric surface. Once the lens body has been lathed to form the second lens surface, the lathed lens body is then delensed from the remaining mold member, and further processed to form a finished contact lens.

The method can also further comprise, the steps of delensing the lathed contact lens body from the first mold member; optionally washing, extracting, hydrating, or any combination thereof, the delensed lathed contact lens body; optionally inspecting the delensed lathed contact lens body; placing the delensed lathed contact lens body in a contact lens package; sealing the filled contact lens package; and sterilizing the sealed contact lens package, producing a finished contact lens product.

The contact lens body can be detached from the mold member in a delensing step utilising delensing apparatus, for example, it can be floated off the mold member after submersion in fluid or lifted from the mold member using a vacuum head after a mechanical separation from the mold member.

The method of manufacturing the contact lens may further comprise inspecting the de-flashed first mold member to check that (a) the unfinished polymerised contact lens body remains on the first mold member; and (b) no flash remains on the first mold member; and either (i) transferring the de-flashed first mold member into a receptacle for storage and/or transport if the unfinished lens body remains on the first mold member and no flash remains on the first mold member; or (ii) disposing of the de-flashed first mold member if the unfinished lens body does not remain on the first mold member or if flash remains on the de-flashed first mold member.

As previously stated, the present disclosure is directed to methods, systems, and apparatus for removal of flash from mold member for manufacturing contact lens bodies, including mold members carrying an unfinished contact lens bodies. All features and steps described herein are applicable, individually or in combination, to both the methods and the apparatus of the present disclosure. It will of course be appreciated that features described in relation to one aspect of the present invention may be incorporated into other aspects of the present invention. For example, the method of the invention may incorporate any of the features described with reference to the system of the invention and vice versa.

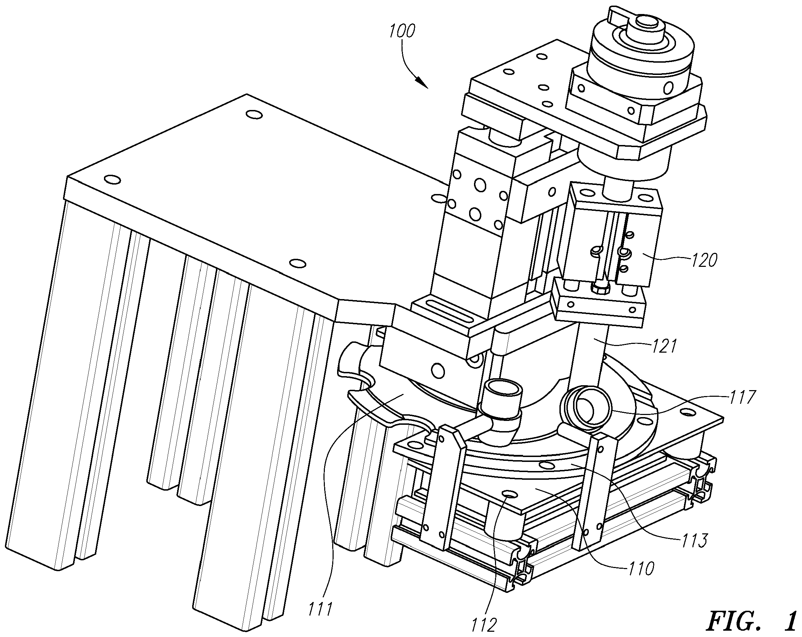

One preferred embodiment of the apparatus of the invention 100 is provided is shown in Fig. 1. The apparatus contains a support 110 which in this embodiment is in the form of a rotary table having a rotary plate 111 and a stationary plate 112. Also connected to the rotary table are outer guide 113 and flash collector 117 having a vacuum head connected to a vacuum pump. The apparatus also contains a de-flashing assembly 120 containing de-flashing element 121, an axial driver and a first rotary driver (not visible).

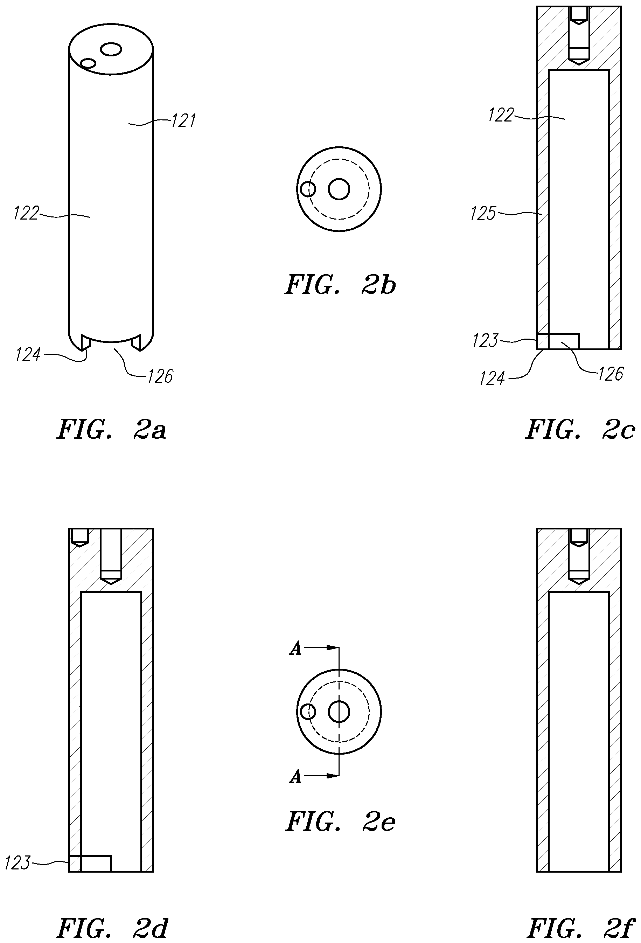

Fig. 2 shows the de-flashing element 121 of Fig. 1 in more detail. The de-flashing element contains a cylindrical tube 122 having an end region 123 including cutting edge 124. The tube wall 125 of the tube 122 has a single recessed portion (i.e. a notch) 126 cut out from the end of the tube wall 125, such that the tube wall 125 adjacent to the recessed portion 126 defines the cutting edge 124.

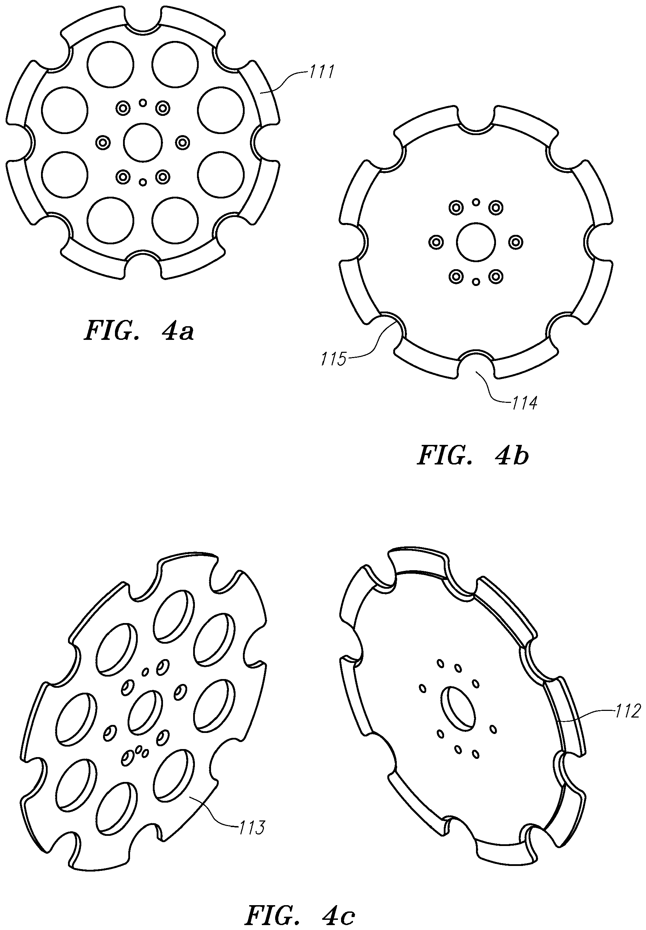

Fig. 4 shows the rotary plate 111 of Fig. 1 in greater detail. As can be seen from Fig. 4, rotary plate 111 is itself formed of two parts, top plate 112 and bottom plate 113. The rotary plate contains recesses 114, such as along an outer periphery of the plate as shown or inwardly from the periphery, for receiving and supporting mold members. Top plate 112 also contains stepped portions 115 which assist in guiding and supporting mold members.

In use, mold members having a lens surface-forming region carrying unfinished polymerized contact lens bodies and a cylindrical base region having a peripheral surface are received and supported by support 110 in recesses 114. Rotary plate 111 is rotated by second rotary driver bringing a first mold member towards and underneath de-flashing element 121, with outer guide 113 and stepped portion 115 assisting in retaining the mold member in place. When the first mold member is located beneath the de-flashing element 121, rotation of the rotary table is halted. The first mold member is subject to a vacuum from underneath rotary plate 111, which assists in retaining the first mold member in position during de-flashing. An axial driver drives the de-flashing element 121 towards the first mold member until the cutting edge 124 is in a position proximal to the peripheral surface of the mold member, partially surrounding the cylindrical base region. The first rotary driver then rotates the de-flashing element 121 such that the cutting edge 124 separates flash from the peripheral surface of the first mold member. The de-flashing element is rotated at least twice, as that has been found, in this example, to increase the amount of flash removed compared with a single rotation. Flash separated from the mold member is collected under suction by flash collector 114 using the vacuum nozzle. Under the action of the axial driver, de-flashing element 121 is then retracted so that it no longer surrounds the mold member. The second rotary driver then rotates rotary plate 111 so that the de-flashed mold member containing the unfinished contact lens body is moved away from the de-flashing element 121 and the next mold member requiring de-flashing is brought towards and underneath the de-flashing element 121.

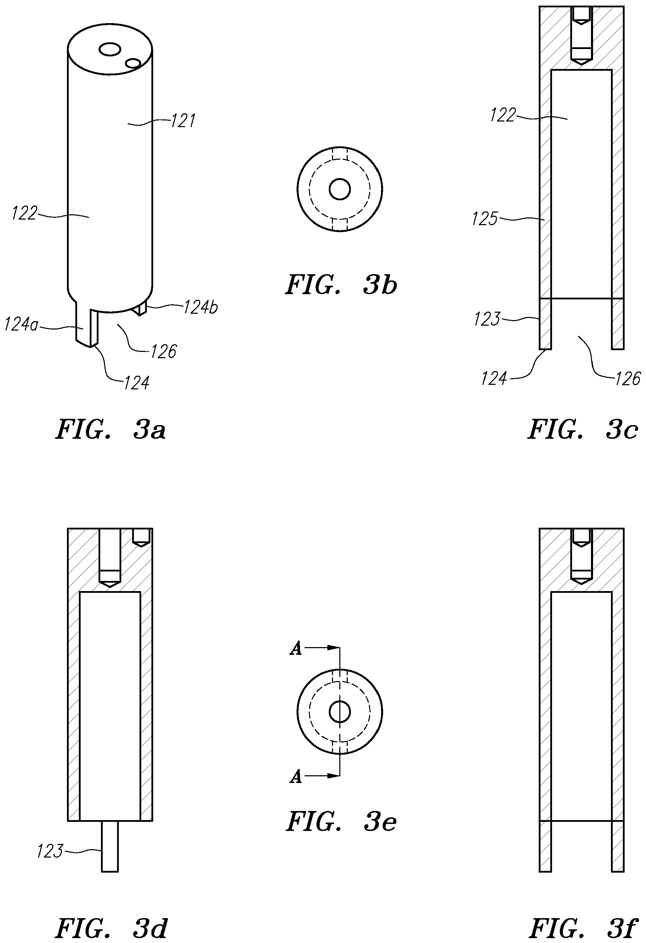

Whilst the present invention has been described and illustrated with reference to particular embodiments, it will be appreciated by those of ordinary skill in the art that the invention lends itself to many different variations not specifically illustrated herein. For example, instead of the de-flashing element containing a tube having a single recessed portion, it may contain two recessed portions, as shown in the embodiment of Fig. 3. The two recessed portions 126 define two depending blades 124a, 124b, each having two cutting edges 124. The proportion of the circumference of the tube which is recessed may also vary, for example, as may the depth of the recess.

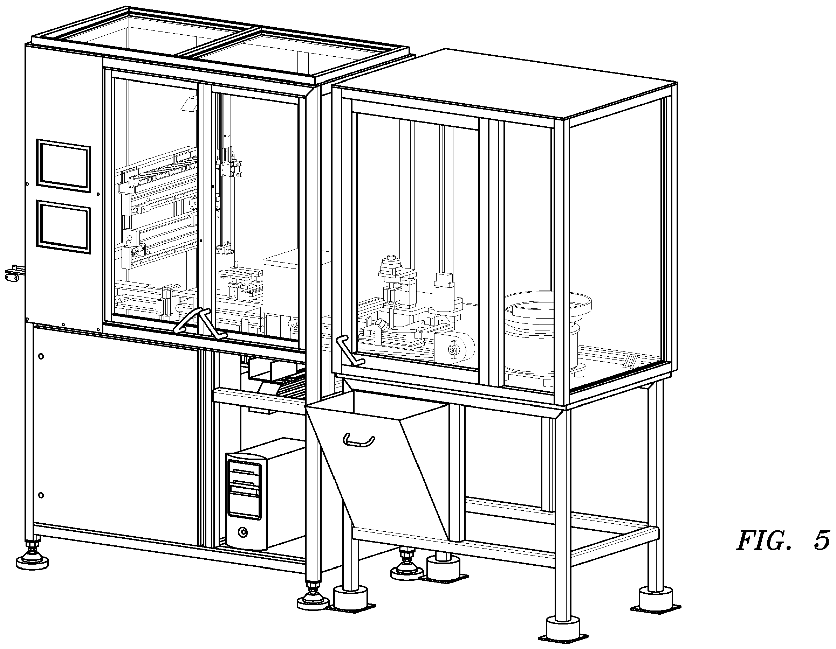

FIG. 5 a system for manufacturing contact lenses, as described herein. Preferably, the system is automated. In the embodiment illustrated in FIG. 5, the system includes a demolder that also includes a deflashing apparatus, as described herein. After deflashing a male mold member with an unfinished contact lens attached to a lens forming surface of the male mold member, the deflashed male mold member is transferred by a conveyor to a vision system for inspection to ensure that the contact lens is not dislodged and that flash is sufficiently removed. After passing inspection, the inspected deflashed male mold member is transferred by a conveyor to an accumulator, which is identified as a tube system.

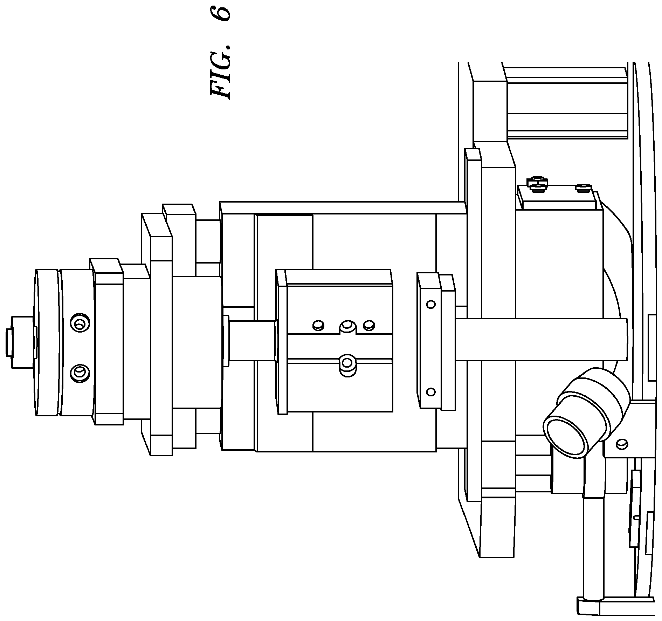

FIG. 6 is an illustration of a demolder, as described herein, and useful in the system of FIG. 5. The demolder includes a punch tool to press on the female mold member and to dislodge the male mold member, which is held by vacuum. A rotational drive is illustrated as a rotational part to cause rotation of a cutting edge of the deflashing element around the circumference of the lens forming surface of the male mold member. A vacuum is coupled to a tube to remove flash debris from the deflashing element and surrounding area.

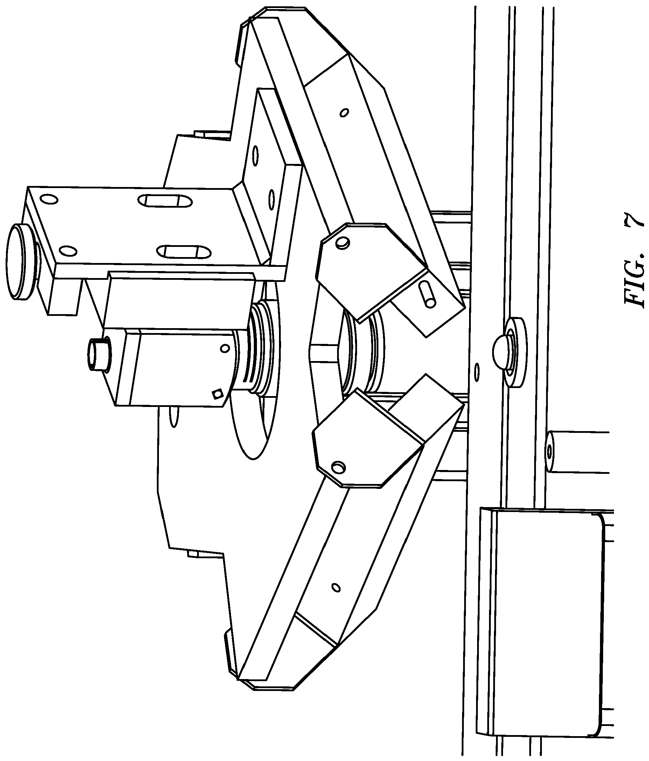

FIG. 7 illustrates one embodiment of the inspection station or vision system or analyzer. In this embodiment, the vision system includes a plurality, such as three, light sources to illuminate the male mold member being inspected. The vision system also includes a camera to obtain an image of the inspected male mold member. Preferably, the camera is a digital camera coupled to a computer to allow for digital processing and inspection of the male mold member.

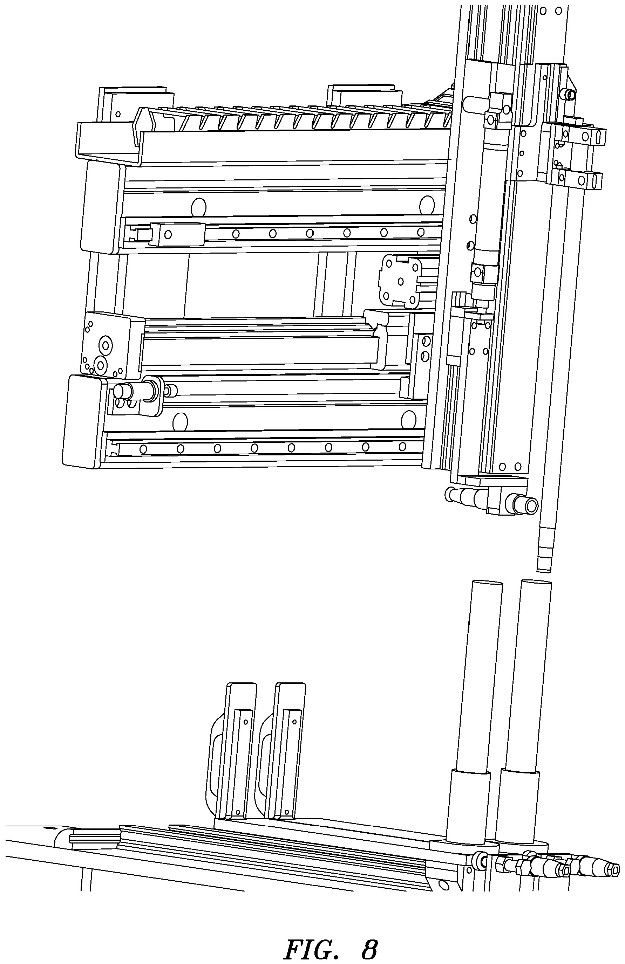

FIG. 8 is an illustration of an accumulator having two tubes shown to accumulate deflashed male mold members.

FIG. 10 illustrates a schematic representation of a deflashing apparatus 200 in accordance with the present disclosure. In FIG. 10, the deflashing apparatus 200 is illustrated as including a de-flashing element 221 having a cutting edge 224. A support 210 is illustrated as including a stationary plate 212 and a rotary plate 211. The rotary plate 211 includes recesses 214 for retaining male mold members 10. The rotary plate 211 can rotate to index a male mold member to be deflashed under the deflashing element 221. An axial driver (not shown) directs the deflashing element 221 towards the male mold member 10 so that the cutting edges 224 are in proximity or contact the flash 13. A rotary driver (not shown) causes rotation of the deflashing element (shown by the curved arrow) to remove flash 13 from the male mold member 10.

In addition, one example of the present methods of manufacturing contact lenses comprises the following steps. Polymerized unfinished contact lens bodies are provided in contact lens mold assemblies that comprise a female mold member and a male mold member assembled together with the polymerized unfinished contact lens body located between a surface of the female mold member and the male mold member. A contact lens mold assembly is demolded to separate the female mold member and the male mold member by a demolder that includes a punching tool. The punching tool contacts the female mold member to cause separation of the male mold member with the polymerized unfinished contact lens body attached to a convex surface of the male mold member. The male mold member is retained on a support by a vacuum during the demolding step. The demolded male mold member with the contact lens body attached thereto is then deflashed to remove any potential flash present on the male mold member. During the deflashing, the male mold member is held by a vacuum to a support. A deflashing element is axially moved toward the male mold member so that a cutting edge of the deflashing element can provide a circular removal of the flash by rotation of the deflashing element relative to the male mold member. A hose coupled to a vacuum removes by suction the cut or loosened flash generated by the deflashing element. The deflashed male mold member with the polymerized unfinished contact lens body is then directed to an inspection station that includes an imaging apparatus, such as a Keyence Vision System. The imaging apparatus is responsible for obtaining images of the male mold member and the unfinished contact lens body, and the images are analyzed to determine if the lens body is attached to the male mold member, and to determine if any excess flash is present on the male mold member. If the lens body is not attached to the male mold member, or if flash is present on the mold member, or both, the method includes rejecting the product. If the lens body is attached to the male mold member and no flash is detected on the mold, the method includes placing the deflashed male mold member and lens body in an accumulator for storage prior to lathing of the unfinished lens body.

Similarly, one example of the present systems for manufacturing contact lenses comprises the following components. A contact lens mold assembly demolder is provided to separate the female mold member and the male mold member. The demolder includes a punching tool. The punching tool contacts the female mold member to cause separation of the male mold member with the polymerized unfinished contact lens body attached to a convex surface of the male mold member. The demolder includes a support that includes a vacuum to retain the male mold member while contacting the female mold member with the punching tool. The system includes a deflashing element configured to provide a circular cut or removal of flash from the male mold member. The deflashing element is configured to move axially relative to the male mold member so that a cutting edge of the deflashing element can provide a circular removal of the flash by rotation of the deflashing element relative to the male mold member. The system also includes a hose coupled to a vacuum that is positioned to remove by suction the cut or loosened flash generated by the deflashing element. The system also includes an inspection station that includes an imaging apparatus, such as a Keyence Vision System. The imaging apparatus is responsible for obtaining images of the male mold member and the unfinished contact lens body, and the images are analyzed to determine if the lens body is attached to the male mold member, and to determine if any excess flash is present on the male mold member. If the lens body is not attached to the male mold member, or if flash is present on the mold member, or both, the method includes rejecting the product. The system also includes an accumulator to store the deflashed male mold member having the contact lens body attached thereto for storage prior to lathing of the unfinished lens body.

Where in the foregoing description, integers or elements are mentioned which have known, obvious or foreseeable equivalents, then such equivalents are herein incorporated as if individually set forth. Reference should be made to the claims for determining the scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may be absent in other embodiments.

## Claims

1. Apparatus (100) for removal of flash from a contact lens male mold member (10) following manufacture of an unfinished polymerized contact lens body (16) in a mold assembly, the contact lens male mold member (10) comprising a mold surface (14) for carrying an unfinished polymerized contact lens body (16) and a peripheral surface (12), the apparatus comprising:
a support (110, 210) for supporting the male mold member (10) during de-flashing;
a de-flashing element (121, 221) for separating flash (13) from the peripheral surface of the male mold member (10), the de-flashing element comprising a cutting edge (124, 224);
an axial driver arranged to bring together the de-flashing element (121, 221) and the male mold member (10) supported on the support (110, 210) such that at least a portion of the cutting edge (124, 224) is in a position proximal to the peripheral surface (12) of the male mold member (10);
a rotary driver arranged to rotate the de-flashing element (121, 221) and/or the male mold member (10) supported on the support (110, 210) relative to each other when at least a portion of the cutting edge (124, 224) is proximal to the peripheral surface (12) of the male mold member (10), thereby separating flash (13) from the peripheral surface of the male mold member (10); and
the contact lens male mold member (10) in contact with the support, wherein the male mold member comprises a cylindrical base region and a lens surface-forming region, wherein the cylindrical base region comprises said peripheral surface (12) and the lens surface-forming region comprises said mold surface (14) for carrying the unfinished polymerized contact lens body (16); wherein the de-flashing element (121, 221) is sized and configured to at least partially surround the cylindrical base region of the male mold member (10) and the rotary driver is arranged to rotate the cutting edge around an outer circumference of the cylindrical base region thereby separating flash (13) from the peripheral surface of the male mold member (10); and wherein the de-flashing element comprises a tube (122) including said cutting edge (124,224), the cutting edge being defined by a notch (126) in said tube (122).

2. Apparatus as claimed in claim 1, in which the rotary driver is configured to rotate the de-flashing element and/or the male mold member relative to each other for at least two complete consecutive rotations around an outer circumference of the cylindrical base region.

3. Apparatus as claimed in any preceding claim, in which the apparatus comprises a flash collector arranged to remove the flash separated from the male mold member by the rotation of the de-flashing element and/or the male mold member.

4. Apparatus as claimed in any preceding claim, in which the support for supporting the male mold member carrying the unfinished polymerized contact lens body during de-flashing comprises a rotary table for transporting said male mold member to and from a vicinity of the de-flashing element by rotation of the rotary table, and wherein the rotary table comprises at least one indentation for receiving said male mold member.

5. Apparatus as claimed in any preceding claim, in which the support for supporting the male mold member includes a vacuum head for retaining the male mold member on the support by suction.

6. Apparatus as claimed in any preceding claim, in which the apparatus comprises an analyser configured to detect one or more of an unfinished polymerized contact lens body, a male mold member, flash remaining on a male mold member, or flash on a support after de-flashing.

7. Apparatus as claimed in any preceding claim, in which the apparatus comprises a lathing apparatus for lathing an optic surface of an unfinished polymerized contact lens body coupled to the male mold member to provide a custom optic on the unfinished polymerized contact lens body, thereby forming a lathed contact lens body.

8. A method of manufacturing a contact lens comprising:
receiving at least one unfinished polymerised contact lens body (16) in at least one contact lens mold assembly, wherein each contact lens mold assembly comprises a male mold member (10) and a female mold member assembled together, and the male mold member (10) comprises a mold surface (14) and a peripheral surface (12);
demolding the mold assembly so that the male mold member (10) is separated from the female mold member and the unfinished polymerized contact lens body (16) remains on the male mold member (10);
bringing together a de-flashing element (121, 221), comprising a cutting edge (124, 224), and the male mold member (10) such that at least a portion of the cutting edge (124, 224) is in a position proximal to the peripheral surface (12) of the male mold member (10); and
rotating the de-flashing element (121, 221) and/or the male mold member (10) relative to each other thereby separating flash from the peripheral surface (12) of the male mold member (10);
wherein the male mold member (10) comprises a cylindrical base region and a lens surface-forming region, wherein the cylindrical base region comprises said peripheral surface (12) and the lens surface-forming region comprises said mold surface (14);
wherein the de-flashing element (121, 221) is sized and configured to at least partially surround the cylindrical base region of the male mold member (10) and the cutting edge (124, 224) is rotated around an outer circumference of the cylindrical base region thereby separating flash from the peripheral surface (12) of the male mold member (10) and
wherein the de-flashing element (121, 221) comprises a tube (122) including said cutting edge (124, 224), the cutting edge being defined by a notch (126) in said tube (122).

9. The method of claim 8, in which the method comprises inspecting the de-flashed male mold member to check that
(a) the unfinished polymerized contact lens body remains on the male mold member; and
(b) no flash remains on the male mold member; and either
(i) transferring the de-flashed male mold member into a receptacle for storage and/or transport if the unfinished polymerised contact lens body remains on the male mold member and no flash remains on the male mold member; or
(ii) disposing of the de-flashed male mold member if the unfinished polymerised contact lens body does not remain on the male mold member or if flash remains on the de-flashed male mold member.

10. The method of claim 8 or claim 9, in which the demolding is achieved by placing the mold assembly under a puncher, said puncher comprising a punch head and a punch driver, and using the punch driver to move the punch head onto the surface of the female mold member with sufficient force that the mold assembly is separated into the male mold member with the unfinished polymerised contact lens body attached, and the female mold member.

11. The method of any one of claims 8 to 10, in which the method comprises, after removal of the flash, the step of lathing at least a portion of a surface of the unfinished polymerised contact lens body to provide a lathed lens surface having a custom optic, forming a lathed contact lens body.

12. The method of claim 11, further comprising the steps of delensing the lathed contact lens body from the male mold member; optionally washing, extracting, hydrating, or any combination thereof, the delensed lathed contact lens body; optionally inspecting the delensed lathed contact lens body; placing the delensed lathed contact lens body in a contact lens package; sealing the filled contact lens package; and sterilizing the sealed contact lens package, producing a finished contact lens product.

13. A system for manufacturing contact lenses, comprising:
a contact lens mold assembly receiver configured to receive contact lens mold assemblies containing polymerized unfinished contact lens products disposed between male and female contact lens mold members;
a contact lens assembly demolder configured to receive at least one contact lens mold assembly from the contact lens mold assembly receiver and to separate the male and female contact lens mold members; and
a de-flashing apparatus configured to remove flash from the demolded contact lens male mold member to which the polymerized unfinished contact lens product is attached, wherein the de-flashing apparatus is apparatus as claimed in claim 1.

14. The system of claim 13, further comprising a lens imaging apparatus configured to image the contact lens on or off of the de-flashed contact lens male mold member.

15. The system of claim 13 or 14, further comprising a lens arrangement to group and arrange de-flashed lenses, attached to contact lens male mold members for delivery to a contact lathing apparatus.

## Patentansprüche

1. Vorrichtung (100) zum Entfernen von einem Grat von einem männlichen Kontaktlinsen-Formelement (10), nach der Herstellung eines unfertigen polymerisierten Kontaktlinsenkörpers (16) in einer Formanordnung, wobei das männliche Kontaktlinsen-Formelement (10) eine Formoberfläche (14) zum Tragen eines unfertigen polymerisierten Kontaktlinsenkörpers (16) und eine periphere Fläche (12) umfasst, wobei die Vorrichtung umfasst:
einen Träger (110, 210) zum Tragen des männlichen Formelements (10) während des Entfernens des Grates; ein Entgratungselement (121, 221) zum Abtrennen des Grates (13) von der peripheren Fläche des männlichen Formelements (10), wobei das Entgratungselement eine Schneidkante (124, 224) aufweist; einen Axialantrieb, der angeordnet ist, um das Entgratungselement (121, 221) und das männliche Formelement (10) zusammenzubringen, das so von dem Träger (110, 210) gestützt wird, dass sich zumindest ein Teil der Schneidkante (124, 224) in einer Position proximal zur peripheren Fläche (12) des männlichen Formelements (10) befindet; einen Drehantrieb, der angeordnet ist, um das Entgratungselement (121, 221) und / oder das männliche Formelement (10) relativ zueinander zu drehen, das von dem Träger (110, 210) getragen wird, wenn sich mindestens ein Abschnitt der Schneidkante (124, 224) proximal zur peripheren Fläche (12) des männlichen Formelements (10) befindet, wodurch der Grat (13) von der peripheren Fläche des männlichen Formelements (10) und dem männlichen Kontaktlinsen-Formelement (10) in Kontakt mit dem Träger getrennt wird, wobei das männliche Formelement einen zylindrischen Basisbereich und einen Linsenoberflächen bildenden Bereich umfasst, wobei der zylindrische Basisbereich die periphere Fläche (12) umfasst, und der die Linsenoberfläche bildenden Bereich die Formfläche (14) zum Tragen des unfertigen polymerisierten Kontaktlinsenkörpers (16) umfasst; wobei das Entgratungselement (121, 221) so bemessen und konfiguriert ist, dass es den zylindrischen Basisbereich des männlichen Formelements (10) mindestens teilweise umgibt und der Drehantrieb so angeordnet ist, dass die Schneidkante um einen Außenumfang des zylindrischen Basisbereiches gedreht wird, wodurch der Grat (13) von der peripheren Fläche des männlichen Formelements (10) getrennt wird; und wobei das Entgratungselement ein Rohr (122) mit der Schneidkante (124, 224) aufweist, wobei die Schneidekante durch eine Kerbe (126) in dem Rohr (122) definiert ist.

2. Vorrichtung nach Anspruch 1, bei der der Drehantrieb so konfiguriert ist, dass er das Entgratungselement und / oder das männliche Formelement relativ zueinander für mindestens zwei vollständige aufeinanderfolgende Umdrehungen um einen Außenumfang des zylindrischen Basisbereichs dreht.

3. Vorrichtung nach einem der vorhergehenden Ansprüche, bei der die Vorrichtung einen Grataufnehmer aufweist, der so angeordnet ist, dass er den durch die Drehung des Entgratungselements und / oder des männlichen Formelements vom männlichen Formelement getrennten Grat entfernt.

4. Vorrichtung nach einem der vorhergehenden Ansprüche, bei der der Träger zum Tragen des männlichen Formelements, das den unfertigen polymerisierten Kontaktlinsenkörper während des Entgratens trägt, einen Drehtisch zum Transportieren des männlichen Formelements zu und von einer Umgebung des Entgratungselements durch Drehen des Drehtisches umfasst, und wobei der Drehtisch mindestens eine Einbuchtung zur Aufnahme des männliche Formelements umfasst.

5. Vorrichtung nach einem der vorhergehenden Ansprüche, bei der der Träger zum Tragen des männlichen Formelements einen Vakuumkopf enthält, der das männliche Formelement durch Ansaugen auf dem Träger halten soll.

6. Vorrichtung nach einem der vorhergehenden Ansprüche, bei der die Vorrichtung eine Analysator umfasst, der konfiguriert ist, um einen oder mehrere von einem unfertigen polymerisierten Kontaktlinsenkörper, einen männlichen Formelement, einem Grat, der auf einem männlichen Formelement verbleibt, oder einen Grat auf einem Träger nach dem Entgraten zu erfassen.

7. Vorrichtung nach einem der vorhergehenden Ansprüche, bei der die Vorrichtung eine Vorrichtung zum Entgraten einer optischen Oberfläche eines unfertigen polymerisierten Kontaktlinsenkörpers aufweist, der an das männliche Formelement gekoppelt ist, um eine kundenspezifische Optik auf dem unfertigen polymerisierten Kontaktlinsenkörper bereitzustellen, wodurch ein entgrateter Kontaktlinsenkörper gebildet wird.

8. Verfahren zur Herstellung einer Kontaktlinse, umfassend:
Aufnahme mindestens eines unfertigen polymerisierten Kontaktlinsenkörpers (16) in mindestens eine Kontaktlinsen-Formanordnung, wobei jede Kontaktlinsen- Formanordnung ein männliches Formelement (10) und ein weibliches Formelement aufweist, die zusammengefügt sind, und das männliche Formelement (10) eine Formoberfläche (14) und eine periphere Oberfläche (12) umfasst; Entnehmen der Formanordnung aus der Form, so dass das männliche Formelement (10) von dem weiblichen Formelement getrennt ist und der unfertige polymerisierte Kontaktlinsenkörper (16) auf dem männlichen Formelement (10) bleibt;
Zusammenbringen eines Entgratungselements (121, 221) mit einer Schneidkante (124, 224) und das männlichen Formelement (10) derart, dass sich mindestens ein Teil der Schneidkante (124, 224) in einer Position in der Nähe der peripheren Fläche (12) des männlichen Formelements (10) befindet; und Drehen des Entgratungselements (121, 221) und / oder des männlichen Formelements (10) relativ zueinander, wodurch der Grat von der peripheren Fläche (12) des männlichen Formelements (10) getrennt wird; wobei das männliche Formelement (10) einen zylindrischen Basisbereich und einen die Linsenoberfläche bildenden Bereich umfasst, wobei der zylindrische Basisbereich die periphere Fläche (12) umfasst und der die Linsenoberfläche bildende Bereich die Formoberfläche (14) umfasst; wobei das Entgratungselement (121, 221) so bemessen und konfiguriert ist, dass es den zylindrischen Basisbereich des männlichen Formelements (10) mindestens teilweise umgibt und die Schneidkante (124, 224) um einen äußeren Umfang des zylindrischen Basisbereichs gedreht wird, wodurch der Grat von der peripheren Fläche (12) des männlichen Formelements (10) getrennt wird und wobei das Entgratungselement (121, 221) ein Rohr (122) einschließlich der Schneidkante (124, 224) aufweist, wobei die Schneidkante durch eine Kerbe (126) in dem Rohr (122) definiert ist.

9. Verfahren nach Anspruch 8, wobei das Verfahren das Prüfen des entgrateten männlichen Formelements umfasst, um zu überprüfen, dass
(a) der unfertige polymerisierte Kontaktlinsenkörper auf dem männlichen Formelement verbleibt; und
(b) kein Grat auf dem männlichen Formelement verbleibt; und entweder
(i) Überführen des entgrateten männlichen Formelements in einen Behälter zur Lagerung und / oder zum Transport, wenn der unfertige polymerisierte Kontaktlinsenkörper auf dem männlichen Formelement verbleibt und kein Grat auf dem männlichen Formelement verbleibt; oder
(ii) Entsorgen des entgrateten männlichen Formelements, wenn der unfertige polymerisierte Kontaktlinsenkörper nicht auf dem männlichen Formelement verbleibt oder, wenn der Grat auf dem entgrateten männlichen Formelement verbleibt.

10. Verfahren nach Anspruch 8 oder Anspruch 9, bei dem das Entformen durch Bringen des Formanordnung unter einem Stanzer erfolgt, wobei der Stanzer einen Stanzkopf und einen Stanztreiber aufweist, und Verwenden des Stanztreibers, um den Stanzkopf mit ausreichender Kraft auf die Oberfläche des weiblichen Formelements zu bewegen, um die Formanordnung in das männliche Formelement mit dem daran befindlichen unfertig polymerisierten Kontaktlinsenkörper und das weibliche Formelement zu trennen.

11. Verfahren nach einem der Ansprüche 8 bis 10, wobei das Verfahren nach dem Entfernen des Grates den Schritt des Entgratens mindestens eines Teils einer Oberfläche des unfertigen polymerisierten Kontaktlinsenkörpers umfasst, um eine entgratete Linsenoberfläche mit einer benutzerdefinierten Optik bereitzustellen, die einen entgrateten Kontaktlinsenkörper bildet.

12. Verfahren nach Anspruch 11, ferner umfassend die Schritte: Entnehmen des entgrateten Kontaktlinsenkörpers aus dem männlichen Formelement; wahlweise Waschen, Extrahieren, Hydratisieren oder irgendeine Kombination davon des aus der Form entnommenen entgrateten Kontaktlinsenkörpers; optional Inspektion des aus der Form entnommenen entgrateten Kontaktlinsenkörpers; Platzieren des aus der Form entnommenen entgrateten Kontaktlinsenkörpers in eine Kontaktlinsenverpackung; Verriegeln der gefüllten Kontaktlinsenverpackung; und Sterilisieren der versiegelten Kontaktlinsenverpackung, wodurch ein fertiges Kontaktlinsenprodukt hergestellt wird.

13. System zur Herstellung von Kontaktlinsen, umfassend: einen Aufnehmer für eine Formanordnung für Kontaktlinsen, der zum Aufnehmen von Formanordnungen für Kontaktlinsen konfiguriert ist, die polymerisierte unfertige Kontaktlinsenprodukte enthalten, die zwischen männlichen und weiblichen Kontaktlinsen-Formelementen angeordnet sind; eine Entformungsvorrichtung für eine Formanordnung für Kontaktlinsen, die konfiguriert ist, um mindestens eine Formanordnung für Kontaktlinsen von dem Aufnehmer für eine Formanordnung für Kontaktlinsen aufzunehmen und die männlichen und weiblichen Kontaktlinsen-Formelemente zu trennen; und eine Entgratungsvorrichtung, die zum Entfernen von Graten von dem aus der Form entnommenen männlichen Kontaktlinsen-Formelement konfiguriert ist, an dem das polymerisierte unfertige Kontaktlinsenprodukt angebracht ist, wobei die Entgratungsvorrichtung eine Vorrichtung nach Anspruch 1 ist.

14. System nach Anspruch 13, ferner umfassend eine Linsenabbildungsvorrichtung, die zum Abbilden der Kontaktlinse auf dem entgrateten männlichen Kontaktlinsen-Formelement oder nach der Entnahme davon konfiguriert ist.

15. System nach Anspruch 13 oder 14, ferner umfassend eine Linsenanordnung zum Gruppieren und Anordnen von entgrateten Linsen, die an männlichen Kontaktlinsen-Formelementen zur Übergabe an eine Kontaktlinsen-Entgratungsvorrichtung angebracht sind.

## Revendications

1. Appareil (100) pour retirer les bavures d'un élément de moule mâle pour lentilles de contact (10) après la fabrication d'un corps de lentille de contact polymérisé non fini (16) dans un ensemble de moules, l'élément de moule mâle pour lentilles de contact (10) comprenant une surface de moule (14) pour supporter un corps de lentille de contact polymérisé non fini (16) et une surface périphérique (12), l'appareil comprenant :
un support (110, 210) pour supporter l'élément de moule mâle (10) pendant l'ébavurage,
un élément d'ébavurage (121, 221) pour séparer les bavures (13) de la surface périphérique de l'élément de moule mâle (10), l'élément d'ébavurage comprenant un bord coupant (124, 224),
un organe de commande axial disposé pour supporter l'élément d'ébavurage (121, 221) et l'élément de moule mâle (10) sur le support (110, 210), de sorte qu'au moins une partie du bord coupant (124, 224) se trouve dans une position proximale de la surface périphérique (12) de l'élément de moule mâle (10),
un organe de commande rotatif disposé pour tourner l'élément d'ébavurage (121, 221) et / ou l'élément de moule mâle (10) supporté sur le support (110, 210) l'un par rapport à l'autre, lorsqu'au moins une partie du bord coupant (124, 224) est proximale de la surface périphérique (12) de l'élément de moule mâle (10), séparant de ce fait les bavures (13) de la surface périphérique de l'élément de moule mâle (10) et
l'élément de moule mâle pour lentilles de contact (10) en contact avec le support, dans lequel l'élément de moule mâle comprend une région à base cylindrique et une région de formation de surface de lentille, dans laquelle la région à base cylindrique comprend ladite surface périphérique (12) et la région de formation de surface de lentille comprend ladite surface de moule (14) pour supporter le corps de lentille de contact polymérisé non fini (16),
dans lequel l'élément d'ébavurage (121, 221) est dimensionné et configuré pour au moins partiellement entourer la région à base cylindrique de l'élément de moule mâle (10) et l'organe de commande rotatif est disposé pour tourner le bord coupant autour d'une circonférence extérieure de la région à base cylindrique, séparant de ce fait les bavures (13) de la surface périphérique de l'élément de moule mâle (10) et
dans lequel l'élément d'ébavurage comprend un tube (122) incluant ledit bord coupant (124, 224), le bord coupant étant défini par une encoche (126) dans ledit tube (122).

2. Appareil selon la revendication 1, dans lequel l'organe de commande rotatif est configuré pour tourner l'élément d'ébavurage et / ou l'élément de moule mâle l'un par rapport à l'autre pendant au moins deux tours consécutifs complets autour d'une circonférence extérieure de la région à base cylindrique.

3. Appareil selon l'une quelconque des revendications précédentes, dans lequel l'appareil comprend un collecteur de bavures disposé pour retirer les bavures séparées de l'élément de moule mâle par la rotation de l'élément d'ébavurage et / ou de l'élément de moule mâle.

4. Appareil selon l'une quelconque des revendications précédentes, dans lequel le support pour supporter l'élément de moule mâle supportant le corps de lentille de contact polymérisé non fini pendant l'ébavurage, comprend une table rotative pour transporter ledit élément de moule mâle vers l'élément d'ébavurage et depuis une zone voisine de celui-ci, par rotation de la table rotative, et dans lequel la table rotative comprend au moins une échancrure pour recevoir ledit élément de moule mâle.

5. Appareil selon l'une quelconque des revendications précédentes, dans lequel le support pour supporter l'élément de moule mâle inclut une tête d'aspiration pour retenir l'élément de moule mâle sur le support par aspiration.

6. Appareil selon l'une quelconque des revendications précédentes, dans lequel l'appareil comprend un analyseur configuré pour détecter un ou plusieurs d'un corps de lentille de contact polymérisé non fini, un élément de moule mâle, les bavures restant sur un élément de moule mâle, ou les bavures sur un support après ébavurage.

7. Appareil selon l'une quelconque des revendications précédentes, dans lequel l'appareil comprend un appareil d'usinage pour usiner une surface optique d'un corps de lentille de contact polymérisé non fini couplé à l'élément de moule mâle pour fournir une optique sur mesure sur le corps de lentille de contact polymérisé non fini, formant de ce fait un corps de lentille de contact usiné.

8. Procédé de fabrication d'une lentille de contact comprenant :
la réception d'au moins un corps de lentille de contact polymérisé non fini (16) dans au moins un ensemble de moules pour lentilles de contact, dans lequel chaque ensemble de moules pour lentilles de contact comprend un élément de moule mâle (10)
et un élément de moule femelle, assemblés, et l'élément de moule mâle (10) comprend une surface de moule (14) et une surface périphérique (12),
le démoulage de l'ensemble de moules de sorte que l'élément de moule mâle (10) est séparé de l'élément de moule femelle et le corps de lentille de contact polymérisé non fini (16) reste sur l'élément de moule mâle (10),
la réunion d'un élément d'ébavurage (121, 221), comprenant un bord coupant (124, 224), et l'élément de moule mâle (10), de sorte qu'au moins une partie du bord coupant (124, 224) se trouve dans une position proximale de la surface périphérique (12) de l'élément de moule mâle (10) et
la rotation de l'élément d'ébavurage (121, 221) et / ou de l'élément de moule mâle (10) l'un par rapport à l'autre
séparant de ce fait les bavures de la surface périphérique (12) de l'élément de moule mâle (10),
dans lequel l'élément de moule mâle (10) comprend une région à base cylindrique et une région de formation de surface de lentille, dans laquelle la région à base cylindrique comprend ladite surface périphérique (12) et la région de formation de surface de lentille comprend ladite surface de moule (14),
dans lequel l'élément d'ébavurage (121, 221) est dimensionné et configuré pour au moins partiellement entourer la région à base cylindrique de l'élément de moule mâle (10) et le bord coupant (124, 224) est tourné autour d'une circonférence extérieure de la région à base cylindrique, séparant de ce fait les bavures de la surface périphérique (12) de l'élément de moule mâle (10) et
dans lequel l'élément d'ébavurage (121, 221) comprend un tube (122) incluant ledit bord coupant (124, 224), le bord coupant étant défini par une encoche (126) dans ledit tube (122).

9. Procédé selon la revendication 8, dans lequel le procédé comprend l'inspection de l'élément de moule mâle ébavuré pour vérifier que
(a) le corps de lentille de contact polymérisé non fini reste sur l'élément de moule mâle et
(b) aucune bavure ne reste sur l'élément de moule mâle et soit
(i) le transfert de l'élément de moule mâle ébavuré dans un réceptacle aux fins de stockage et / ou de transport, si le corps de lentille de contact polymérisé non fini reste sur l'élément de moule mâle, et aucune bavure ne reste sur l'élément de moule mâle soit
(ii) l'élimination de l'élément de moule mâle ébavuré, si le corps de lentille de contact polymérisé non fini ne reste pas sur l'élément de moule mâle, ou si des bavures restent sur l'élément de moule mâle ébavuré.

10. Procédé selon la revendication 8 ou la revendication 9, dans lequel le démoulage est réalisé en plaçant l'ensemble de moules sous un poinçon, ledit poinçon comprenant une tête de poinçon et un entraîneur de poinçon, et en utilisant l'entraîneur de poinçon pour déplacer la tête de poinçon sur la surface de l'élément de moule femelle avec une force suffisante pour que l'ensemble de moules soit séparé dans l'élément de moule mâle du corps de lentille de contact polymérisé non fini, fixé, et de l'élément de moule femelle.

11. Procédé selon l'une quelconque des revendications 8 à 10, dans lequel le procédé comprend, après enlèvement des bavures, l'étape d'usinage d'au moins une partie d'une surface du corps de lentille de contact polymérisé non fini pour fournir une surface de lentille usinée ayant une optique sur mesure, formant un corps de lentille de contact usiné.

12. Procédé selon la revendication 11 comprenant, en outre, les étapes de retrait du corps de lentille de contact usiné de l'élément de moule mâle, de lavage, l'extraction, l'hydratation, facultatif (ve), ou une combinaison quelconque de ces opérations, du corps de lentille de contact usiné retiré, d'inspection facultative du corps de lentille de contact usiné retiré, de placement du corps de lentille de contact usiné retiré dans un conditionnement pour lentilles de contact, d'étanchéification du conditionnement pour lentilles de contact, rempli, et de stérilisation du conditionnement pour lentilles de contact, étanchéifié, pour produire un produit de lentilles de contact fini.

13. Système de fabrication de lentilles de contact comprenant :
un récepteur d'ensemble de moules pour lentilles de contact configuré pour recevoir des ensembles de moules pour lentilles de contact contenant des produits de lentilles de contact polymérisés non finis, disposés entre les éléments de moules mâles et femelle pour lentilles de contact,
un démouleur d'ensemble de lentilles de contact configuré pour recevoir au moins un ensemble de moules pour lentilles de contact du récepteur d'ensemble de moules pour lentilles de contact, et pour séparer les éléments de moules mâle et femelle pur lentilles de contact et
un appareil d'ébavurage configuré pour recevoir les bavures de l'élément de moule mâle pour lentilles de contact, démoulé, auquel est fixé le produit de lentille de contact polymérisé non fini, dans lequel l'appareil d'ébavurage est un appareil selon la revendication 1.

14. Système selon la revendication 13, comprenant, en outre, un appareil d'imagerie de lentille configuré pour former une image de la lentille de contact sur ou en dehors de l'élément de moule mâle pour lentilles de contact ébavuré.

15. Système selon la revendication 13 ou 14, comprenant, en outre, un agencement de lentilles pour grouper et agencer des lentilles ébavurées, fixées à des éléments de moule mâle pour lentilles de contact, pour les fournir à un appareil d'usinage de contact.
